# EUROPEAN PATENT APPLICATION

(11) **EP 4 383 096 A1**
(43) Date of publication of application: **12.06.2024**
(21) Application number: 22868977.4
(22) Date of filing: 23.08.2022
(51) Int. Cl.: G06F 16/9535

(54) **SEARCH METHOD, TERMINAL, SERVER AND SYSTEM**

(30) Priority: 15.09.2021 CN 202111083013
(71) Applicant: Huawei Technologies Co., Ltd., Shenzhen, Guangdong 518129 (CN)
(72) Inventor: ZHONG, Weicai, Shenzhen, Guangdong 518129 (CN); WANG, Yang, Shenzhen, Guangdong 518129 (CN); WANG, Xiaoqian, Shenzhen, Guangdong 518129 (CN); HE, Baoji, Shenzhen, Guangdong 518129 (CN)
(74) Representative: Maiwald GmbH
(86) International application number: PCT/CN2022/114228
(87) International publication number: WO 2023/040603

(57) **Abstract**

This application discloses a search method, a terminal, a server, and a system. The method includes: The terminal receives first information input by a user in an input box of a first interface. When the user performs an operation on the first interface of the terminal, the terminal requests the server to search for the first information. The server obtains, based on the first information through searching, a product or service that is provided by a target vendor and that is related to the first information, and sends the product or service provided by the target vendor to the terminal. A second interface of the terminal displays the product or service provided by the target vendor. In this way, the user can accurately obtain searched-for content through searching, and a search requirement in an actual application scenario of the user is met. In addition, a purpose of brand promotion is achieved, and user experience is improved.

## Description

This application claims priority to Chinese Patent Application No. 202111083013.6, filed with the China National Intellectual Property Administration on September 15, 2021 and entitled "SEARCH METHOD, TERMINAL, SERVER, AND SYSTEM", which is incorporated herein by reference in its entirety.

### TECHNICAL FIELD

Embodiments of the present invention relate to the field of communication technologies, and in particular, to a search method, a terminal, a server, and a system.

### BACKGROUND

Brand advertisement is a form of advertisement used to establish brand images of products and increase market shares of brands. Usually, a brand advertisement may include information such as a brand name, a brand description, an official application, a service link, a social media link, and a product recommendation. Display content of a brand advertisement template is fixed materials prepared by a brand company in advance. When a user searches for various content of the brand advertisement, a terminal displays fixed content set for the brand advertisement. It can be learned that an association degree of searched-for content of the user and a search result is low, and content that the user wants to search for cannot be accurately provided, resulting in poor user experience.

### SUMMARY

Embodiments of this application provide a search method, a terminal, a server, and a system, to accurately help a user obtain a searched-for thing through searching, meet a search requirement of the user in an actual application scenario. In addition, a purpose of brand promotion is achieved, and user experience is improved.

To achieve the foregoing purposes, the following technical solutions are used in embodiments of this application.

According to a first aspect, an embodiment of this application provides a search method. The method includes: A terminal receives first information input by a user in an input box of a first interface. In response to an operation of the user on the first interface, the terminal requests a server to search for the first information. The terminal displays a second interface, the second interface includes an introduction of a target vendor and a product or service provided by the target vendor, and the product or service provided by the target vendor is associated with the first information.

The input box may alternatively be replaced with a search box, a search bar, a query box, or the like.

In this way, the terminal receives the first information input by the user in the input box of the first interface. When the user performs the operation on the first interface of the terminal, the terminal requests the server to search for the first information. The server obtains, based on the first information through searching, the product or service that is provided by the target vendor and that is related to the first information, and sends the product or service provided by the target vendor to the terminal. The second interface of the terminal displays the product or service provided by the target vendor. In this way, the user can accurately obtain searched-for content through searching, and a search requirement in an actual application scenario of the user is met. In addition, a purpose of brand promotion is achieved, and user experience is improved.

In some implementations, before the terminal displays a second interface, the search method provided in an embodiment of this application further includes: The server extracts a keyword in the first information. The server determines at least one vendor based on the keyword in the first information and a pre-stored correspondence between a keyword and a vendor. The server determines the target vendor from the at least one vendor based on a bidding rule.

In some implementations, before the terminal displays a second interface, the search method provided in an embodiment of this application further includes: The server extracts key information of the first information. The server determines the at least one vendor based on the key information of the first information and a pre-stored correspondence between key information and a vendor. The server determines the target vendor from the at least one vendor based on the bidding rule.

The key information is determined based on an information form of the first information. For example, the first information is a text, and correspondingly, the key information may be a keyword. The first information is an image, and correspondingly, the key information may be an image feature. The first information is a video, and correspondingly, the key information may be an image.

In some implementations, before the terminal displays a second interface, the search method provided in an embodiment of this application further includes: The server determines a search intent of the user based on the first information. The server determines at least one vendor based on the search intent of the user. The server determines, through matching, the target vendor from the at least one vendor based on a keyword in the first information and a bidding rule.

In a specific implementation, the bidding rule may include a payment mode and/or payment standard for advertisement. Definitely, the bidding rule may further include other content, such as an advertisement fee. This is not specifically limited in embodiments of this application. In a specific implementation, a payment mode may include payment based on a tap, payment based on an exposure rate, or the like.

In some implementations, the search method provided in an embodiment of this application further includes: The server determines a copy template based on the search intent and the keyword in the first information. The server fills the copy template based on a name of the target vendor, the keyword in the first information, and a pre-stored expression library, to generate a copy. The server selects an image material from a material library of the target vendor based on the keyword in the first information. The server typesets the copy and the image material and then sends the typeset copy and image material to the terminal.

The copy and the image material may be typeset and arranged and an obtained typesetting pattern may be in a plurality of forms. This is not specifically limited in embodiments of this application.

In some implementations, the search method provided in an embodiment of this application further includes: The terminal receives the typeset copy and image material, and performs rendering to display the product or service provided by the target vendor.

In some implementations, the search method provided in an embodiment of this application further includes: The server sends a pre-stored introduction of the target vendor to the terminal. The terminal receives the introduction of the target vendor, and performs rendering to display the introduction of the target vendor.

In some implementations, the first information may be a text, an image, or a video.

In some implementations, the search intent may include movies and television, shopping, delicious foods, or travel. Movies and television may include: a short video, a TV play, a music video (music video, MV), and the like. Shopping may include commodities such as clothing (such as shoes, clothes, and hats), daily necessities (such as laundry detergents, rice, flour, and oil), cosmetics (such as eye creams, lotions, toners, and serums), electrical appliances (such as refrigerators, washing machines, and TV sets), and electronic products (such as mobile phones and computers). Delicious foods may include: fast food, noodles, hot pots, roasted meats, grilled food, and the like. Travel may include tourist attractions, hotels, entrance tickets, and bus tickets. Certainly, there may further be another type, such as parents and children, beauty maintenance, games, or the like.

According to a second aspect, an embodiment of this application provides a search system. The search system may include a terminal. The terminal is configured to: receive first information input by a user in an input box of a first interface; in response to an operation of the user on the first interface, request a server to search for the first information; and display a second interface, where the second interface includes an introduction of a target vendor and a product or service provided by the target vendor, and the product or service provided by the target vendor is associated with the first information.

In this way, the terminal receives the first information input by the user in the input box of the first interface. When the user performs the operation on the first interface of the terminal, the terminal requests the server to search for the first information. The server obtains, based on the first information through searching, the product or service that is provided by the target vendor and that is related to the first information, and sends the product or service provided by the target vendor to the terminal. The second interface of the terminal displays the product or service provided by the target vendor. In this way, the user can accurately obtain searched-for content through searching, and a search requirement in an actual application scenario of the user is met. In addition, a purpose of brand promotion is achieved, and user experience is improved.

In some implementations, the search system provided in an embodiment of this application may further include a server. The server is configured to: extract a keyword in the first information; determine at least one vendor based on the keyword in the first information and a pre-stored correspondence between a keyword and a vendor; and determine the target vendor from the at least one vendor based on a bidding rule.

In some implementations, the search system provided in an embodiment of this application further includes a server. The server is configured to: determine a search intent of the user based on the first information; determine at least one vendor based on the search intent of the user; and determine, through matching, the target vendor from the at least one vendor based on a keyword in the first information and a bidding rule.

In some implementations, a search server provided in an embodiment of this application is further configured to: determine a copy template based on the search intent and the keyword in the first information; fill the copy template based on a name of the target vendor, the keyword in the first information, and a pre-stored expression library to generate a copy; select an image material from a material library of the target vendor based on the keyword in the first information; and
typeset the copy and the image material and then send the typeset copy and image material to the terminal.

In some implementations, the terminal is further configured to: receive the typeset copy and image material, and perform rendering to display the product or service provided by the target vendor.

In some implementations, the server is further configured to send the pre-stored introduction of the target vendor to the terminal. The terminal is further configured to receive the introduction of the target vendor, and performs rendering to display the introduction of the target vendor.

In some implementations, the first information may be a text, an image, or a video.

In some implementations, the search intent may include movies and television, shopping, delicious foods, or travel.

According to a third aspect, an embodiment of this application provides a terminal, where the terminal includes a touchscreen, a memory, a transceiver, one or more processors, a plurality of applications, and one or more programs, the one or more programs are stored in the memory, the transceiver is configured to transmit or receive a wireless signal, and when the one or more processors execute the one or more programs, the terminal is enabled to implement the method according to the first aspect.

According to a fourth aspect, an embodiment of this application provides a server, where the server includes a memory, a transceiver, one or more processors, a plurality of applications, and one or more programs, the one or more programs are stored in the memory, the transceiver is configured to transmit or receive a wireless signal, and when the one or more processors execute the one or more programs, the server is enabled to implement the method according to the first aspect.

According to a fifth aspect, an embodiment of this application provides a computer-readable storage medium. The computer storage medium includes computer instructions. When the computer instructions are run on an electronic device, the electronic device is enabled to perform the method according to the first aspect.

According to a sixth aspect, an embodiment of this application provides a computer program. When the program is invoked by a processor, the method according to the first aspect is performed.

According to a seventh aspect, an embodiment of this application provides a chip system that includes one or more processors. When the one or more processors execute instructions, the one or more processors perform the method according to the first aspect.

For specific implementations and corresponding technical effects of embodiments in the third aspect to the seventh aspect, refer to the specific implementations and technical effects of the first aspect.

In an embodiment of this application, the terminal receives the first information input by the user in the input box of the first interface. When the user performs the operation on the first interface of the terminal, the terminal requests the server to search for the first information. The server obtains, based on the first information through searching, the product or service that is provided by the target vendor and that is related to the first information, and sends the product or service provided by the target vendor to the terminal. The second interface of the terminal displays the product or service provided by the target vendor. In this way, the user can accurately obtain searched-for content through searching, and a search requirement in an actual application scenario of the user is met. In addition, a purpose of brand promotion is achieved, and user experience is improved.

### BRIEF DESCRIPTION OF DRAWINGS

To explain technical solutions in embodiments of this application more clearly, the following briefly describes accompanying drawings used for describing embodiments or the conventional technology. It is clear that the accompanying drawings in the following descriptions show merely some embodiments of this application, and a person of ordinary skill in the art may still derive other drawings from these accompanying drawings without creative efforts.
FIG. 1 is a schematic diagram of a display interface of a terminal;
FIG. 2 is a schematic diagram of another display interface of a terminal;
FIG. 3 is a schematic diagram of still another display interface of a terminal;
FIG. 4 is a schematic diagram of yet another display interface of a terminal;
FIG. 5 is a schematic diagram of a display page of a terminal according to an embodiment of this application;
FIG. 6 is a schematic diagram of another display page of a terminal according to an embodiment of this application;
FIG. 7a is a schematic diagram of an application scenario of a search method according to an embodiment of this application;
FIG. 7b is a schematic diagram of an application scenario of a search method according to an embodiment of this application;
FIG. 7c is a schematic diagram of an application scenario of a search method according to an embodiment of this application;
FIG. 8 is a schematic diagram of an application scenario of a search method according to an embodiment of this application;
FIG. 9 is a schematic diagram of an application scenario of a search method according to an embodiment of this application;
FIG. 10 is a schematic diagram of an application scenario of a search method according to an embodiment of this application;
FIG. 11a is a schematic diagram of a structure of a search system according to an embodiment of this application;
FIG. 11b is a block diagram of a structure of a search system according to an embodiment of this application;
FIG. 12 is a schematic diagram of a structure of a terminal according to an embodiment of this application;
FIG. 13a is a schematic flowchart of a search method according to an embodiment of this application;
FIG. 13b is a schematic flowchart of another search method according to an embodiment of this application; and
FIG. 14 is a schematic diagram in which a server interprets first information in a search method according to an embodiment of this application.

### DESCRIPTION OF EMBODIMENTS

In the following description, the terms "first" and "second" are merely intended for a purpose of description, and shall not be interpreted as indicating or implying relative importance or implying a quantity of indicated technical features. Therefore, a feature defined with "first" or "second" may explicitly or implicitly include one or more features. In the description of embodiments, unless otherwise specified, "a plurality of" means two or more.

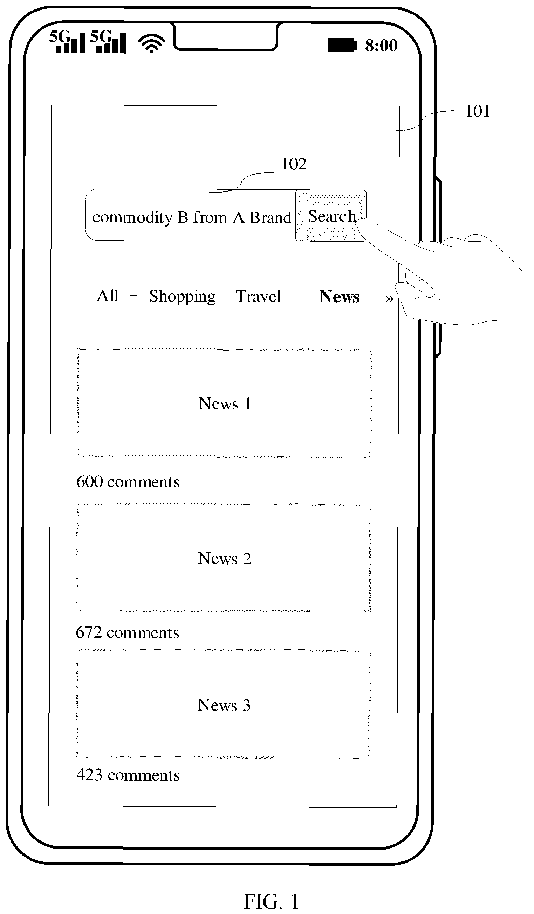

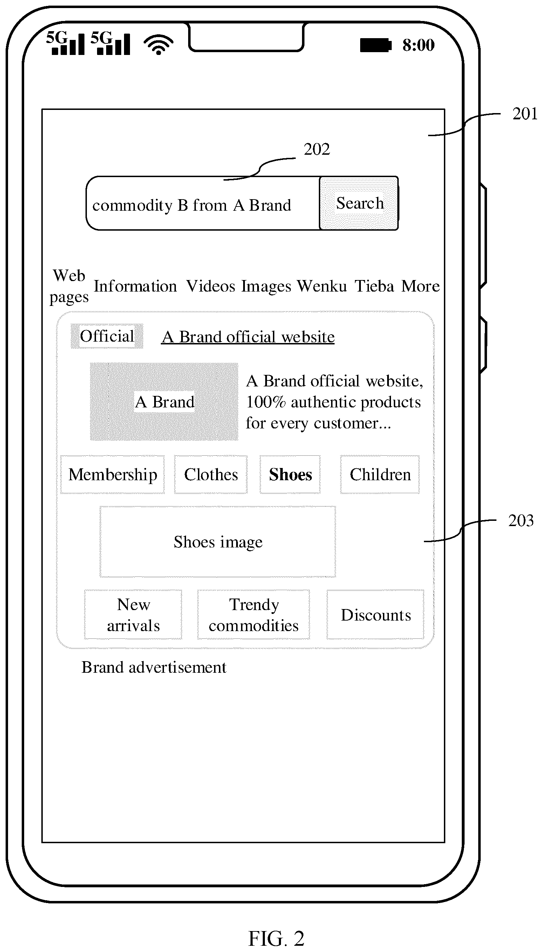

Usually, a user may identify searched-for content by using a search app, a search website, or the like on a terminal and search for a search result that is corresponding to the searched-for content. For example, the user opens the search app on the terminal, and the terminal displays an interface of the app. FIG. 1 is a schematic diagram of an interface 101 of an app displayed by a terminal. "commodity B from A Brand" is input in an input box 102 of the page 101 of the app of the terminal. The app uploads searched-for content "commodity B from A Brand" to a server. The server searches a database based on the searched-for content, obtains a search result, and sends the search result to the terminal. FIG. 2 is a schematic diagram of an interface 201 of a search result displayed by a terminal. The searched-for content "commodity B from A Brand" and a search result 203 (for example, a brand advertisement of A Brand) obtained through searching are displayed on the interface 201.

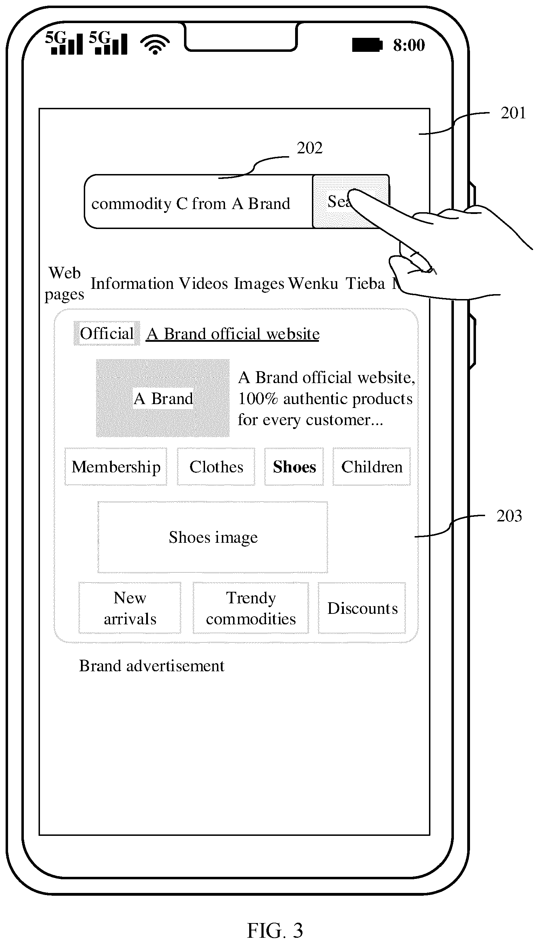

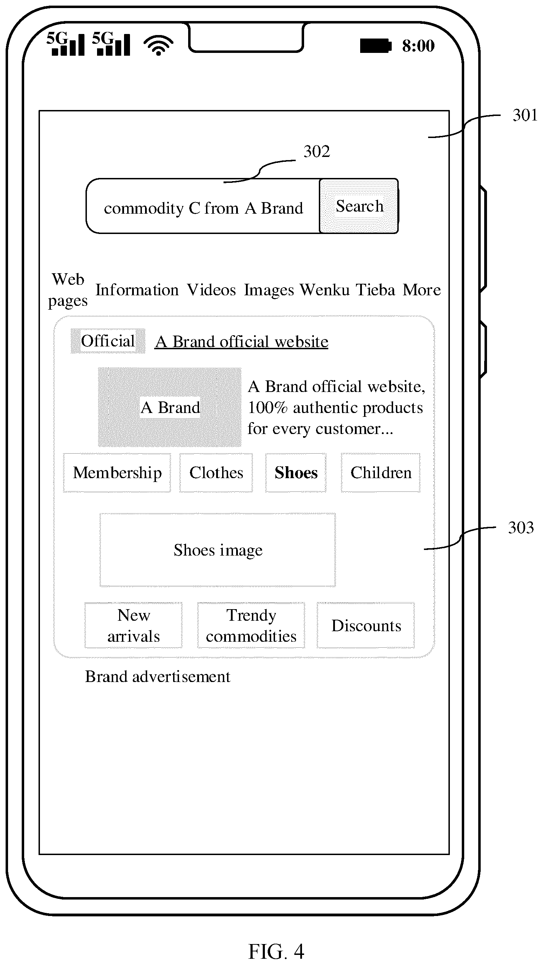

When the user inputs "commodity C from A Brand" in an input box 202 of the interface 201 shown in FIG. 2, an electronic device may display an interface shown in FIG. 3. When the user taps a "Search" control, the app uploads searched-for content "commodity C from A Brand" to the server. The server searches the database based on the searched-for content, obtains a search result, and sends the search result to the terminal. FIG. 4 is a schematic diagram of another interface 301 of a search result displayed by a terminal. The searched-for content "commodity C from A Brand" and a search result 303 (for example, the brand advertisement of A Brand) obtained through searching are displayed in an input box 302 of the interface 301.

It can be seen that the search results obtained after a user inputs "commodity B from A Brand" and "commodity C from A Brand" in the input box of the terminal are the same (203 shown in FIG. 2 and 303 shown in FIG. 4). However, the user wants to obtain, through searching, information about "commodity B" and "commodity C" from A Brand instead of information about A Brand. It can be learned that, in a current search method, an association degree of searched-for content of a user and a search result is low, and content that a user wants to search for cannot be accurately provided, resulting in poor user experience.

To resolve the foregoing technical problems, in an embodiment of this application, a terminal receives first information input by a user in an input box of a first interface. In response to a first operation of the user on the first interface, the terminal requests a server to search for the first information. The terminal displays a second interface, the second interface includes an introduction of a target vendor and a product or service provided by the target vendor, and the product or service provided by the target vendor is associated with the first information.

In a specific implementation, the second interface includes a first area, the first area displays the introduction of the target vendor, the first area includes a second area, and the second area displays the product or service provided by the target vendor.

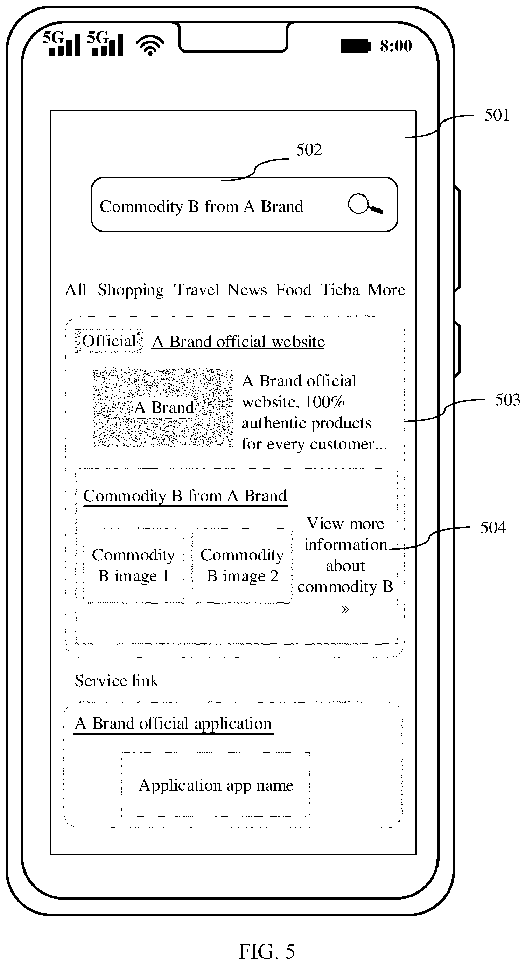

Example 1: It is assumed that the first information is "commodity B from A Brand". When the user inputs "commodity B from A Brand" in the input box 102 on the interface 101 shown in FIG. 1, and the user taps the "Search" control on the interface 101, the terminal receives an operation of the user on the interface 101, and the terminal requests the server to search for "commodity B from A Brand". The server searches for information about "commodity B from A Brand" and sends the information to the terminal. The terminal displays an interface 501 shown in FIG. 5. On the interface 501, a first area 503 displays an introduction of A Brand, and a second area 504 in the first area 503 displays information about the commodity B.

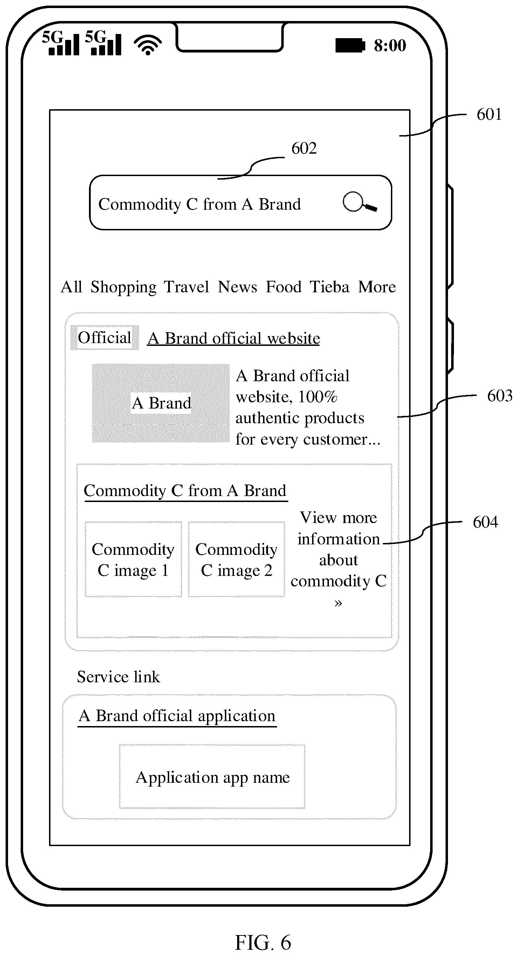

Similarly, it is assumed that the first information is "commodity C from A Brand". When the user inputs "commodity C from A Brand" in the input box 102 on the interface 101 shown in FIG. 1, and the user taps the "Search" control on the interface 101, the terminal receives an operation of the user on the interface 101, and the terminal requests the server to search for "commodity C from A Brand". The server searches for information about "commodity C from A Brand" and sends the information to the terminal. The terminal displays an interface 601 shown in FIG. 6. On the interface 601, a first area 603 displays the introduction of A Brand, and a second area 604 in the first area 603 displays information about the commodity C.

Example 2: Similar to related description in the foregoing example 1, it is assumed that the first information is "service B from A Brand". When the user inputs "service B from A Brand" in the input box 102 on the interface 101 shown in FIG. 1, the terminal requests the server to search for "service B from A Brand". The server searches for information about "service B from A Brand" and sends the information to the terminal. The terminal displays the introduction of A Brand and information about the service B.

It can be learned that, when the user performs the operation on the first interface to search for the first information, the server obtains, based on the first information through searching, the product or service that is provided by the target vendor and that is related to the first information, so that the user can accurately obtain searched-for content through searching, and a search requirement in an actual application scenario of the user is met. In addition, a purpose of brand promotion is achieved, and user experience is improved.

In some examples, the first information may be information in an image form, or may be text information, or may be a video. This is not specifically limited in embodiments of this application. The image may be an image stored in a database, or may be an image obtained by invoking a camera to take a photo.

In some examples, before the terminal displays a second interface, the search method provided in this application further includes: The server determines a search intent of the user based on the first information. The server determines at least one vendor based on the search intent of the user. The server determines, through matching, the target vendor from the at least one vendor based on a keyword in the first information and a bidding rule.

In a specific implementation, that the server determines, through matching, the target vendor from the at least one vendor based on a keyword in the first information and a bidding rule may be understood as that the server may obtain a plurality of vendors from the at least one vendor based on the bidding rule through searching. The server determines, through matching, the target vendor from the plurality of vendors based on the keyword in the first information, and the product or service provided by the target vendor is associated with the keyword in the first information.

In a specific implementation, the search intent of the user may include movies and television, shopping, delicious foods, or travel. Movies and television may include: a short video, a TV play, a music video (music video, MV), and the like. Shopping may include commodities such as clothing (such as shoes, clothes, and hats), daily necessities (such as laundry detergents, rice, flour, and oil), cosmetics (such as eye creams, lotions, toners, and serums), electrical appliances (such as refrigerators, washing machines, and TV sets), and electronic products (such as mobile phones and computers). Delicious foods may include: fast food, noodles, hot pots, roasted meats, grilled food, and the like. Travel may include tourist attractions, hotels, entrance tickets, and bus tickets. Certainly, there may further be another type, such as parents and children, beauty maintenance, games, or the like. This is not specifically limited in embodiments of this application.

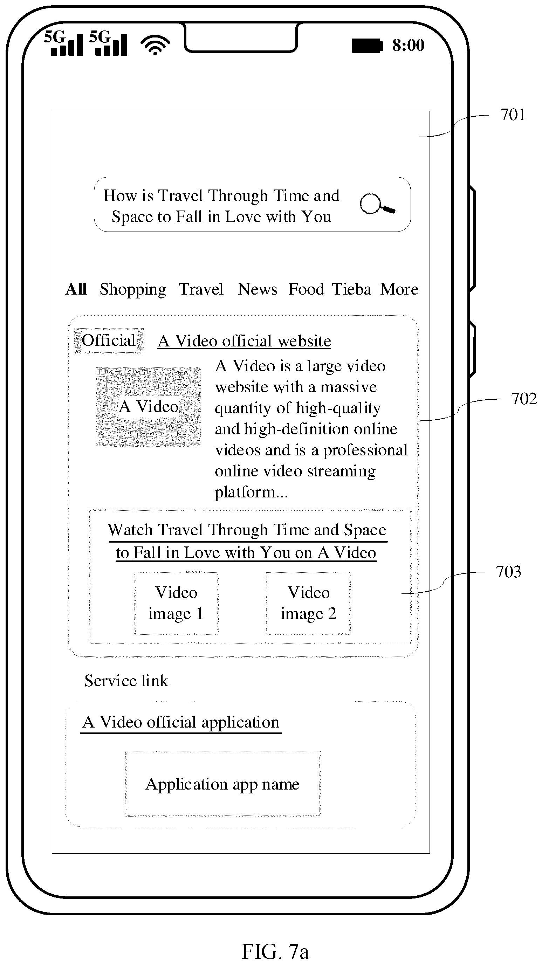

For example, FIG. 7a is a schematic diagram of an application scenario of a display interface of a terminal according to an embodiment of this application. It is assumed that first information is "How is Travel Through Time and Space to Fall in Love with You". After a user inputs "How is Travel Through Time and Space to Fall in Love with You" in an input box, a server identifies that a search intent of the user is movies and television. The server performs matching with at least one vendor of movies and television, and determines, through matching, A Video (which may be understood as a video app or a video web page streaming platform) from the at least one vendor based on a keyword "Travel Through Time and Space to Fall in Love with You" and a bidding rule. For "Travel Through Time and Space to Fall in Love with You", the server obtains movie comment information of "Travel Through Time and Space to Fall in Love with You" on A Video through searching and sends the movie comment information to the terminal. The terminal displays an interface 701 shown in FIG. 7a, displays information about A Video in a first area 702 of the interface 701, and displays information about a movie "Travel Through Time and Space to Fall in Love with You" and the movie comment information of the movie in a second area 703 of the first area 702.

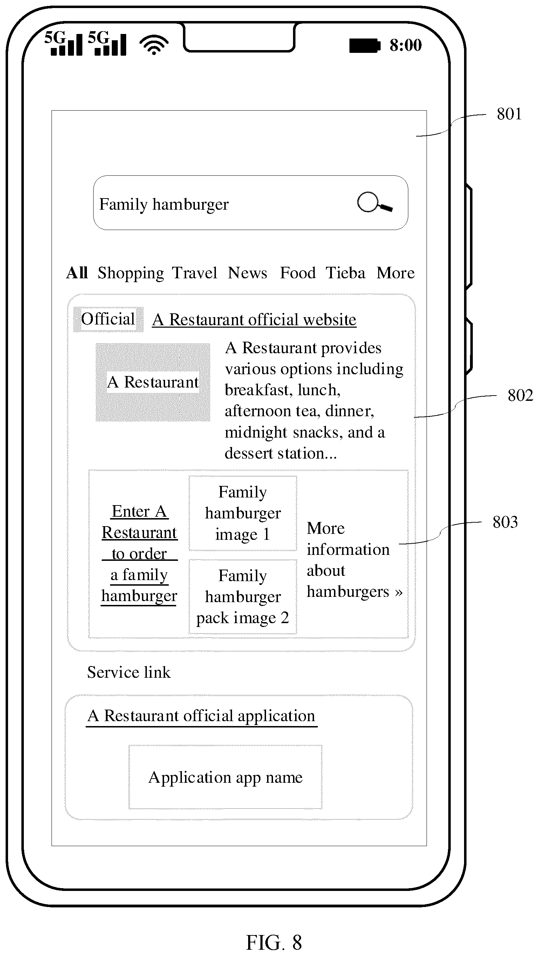

For example, FIG. 8 is a schematic diagram of another application scenario of a display interface of a terminal according to an embodiment of this application. It is assumed that first information is "family hamburger". After a user inputs "family hamburger" in an input box, a server identifies that a search intent of the user is delicious foods. The server performs matching with at least one vendor of delicious foods, and determines, through matching, A Restaurant from the at least one vendor based on a keyword "family hamburger" and a bidding rule. The server obtains, through searching, a fact that the "family hamburger" is for sale at A Restaurant, and sends the information to the terminal. The terminal displays an interface 801 shown in FIG. 8, displays information about A Restaurant in a first area 802 of the interface 801, and displays information about the "family hamburger" in a second area 803 of the first area 802.

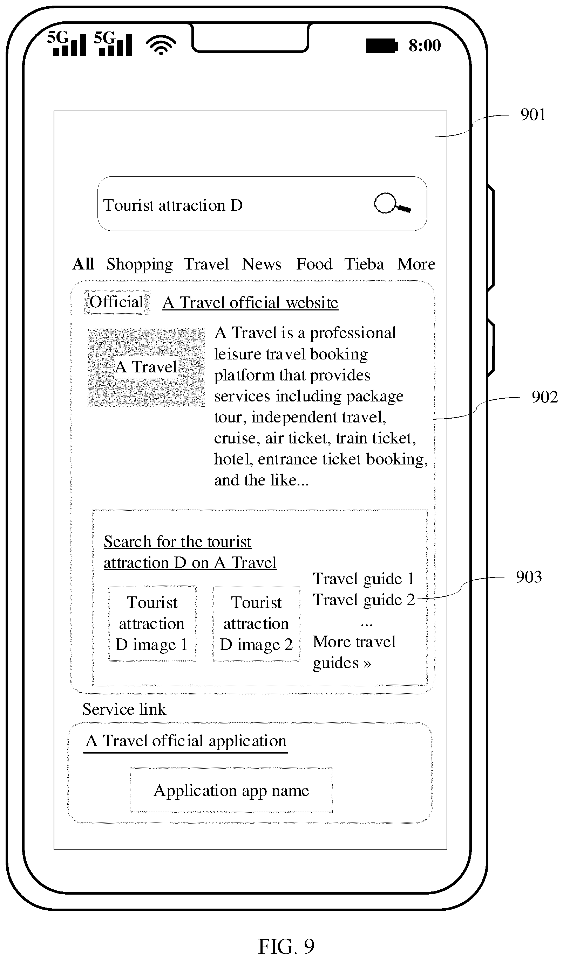

For example, FIG. 9 is a schematic diagram of still another application scenario of a display interface of a terminal according to an embodiment of this application. It is assumed that first information is "tourist attraction D travel guide". After a user inputs "tourist attraction D travel guide" in an input box, a server identifies that a search intent of the user is travel. The server performs matching with at least one vendor of travel, and determines, through matching, A Travel (which may be understood as a travel app or a travel web page platform) from the at least one vendor based on a keyword "tourist attraction D" and a bidding rule. The server obtains, through searching, a fact that the "tourist attraction D" sells entrance tickets on A Travel, obtains the travel guide to the "tourist attraction D" on A Travel through searching and sends the travel guide to the terminal. The terminal displays an interface 901 shown in FIG. 9, displays information about A Travel in a first area 902 of the interface 901, and displays information about "tourist attraction D" and the travel guide to the tourist attraction D in a second area 903 of the first area 902.

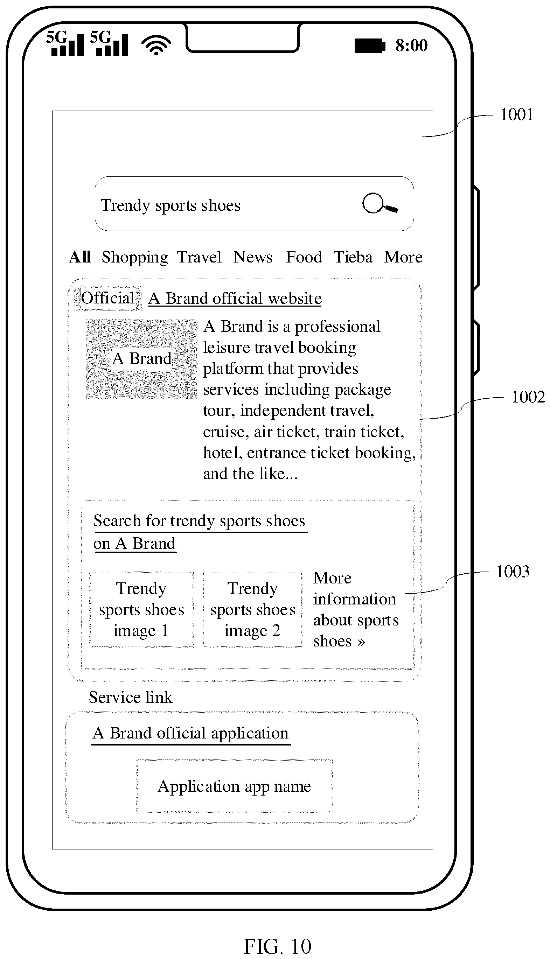

For example, FIG. 10 is a schematic diagram of yet still another application scenario of a display interface of a terminal according to an embodiment of this application. It is assumed that first information is "trendy sports shoes". After a user inputs "trendy sports shoes" in an input box, a server identifies that a search intent of the user is shopping. The server performs matching with at least one vendor of shopping, and determines, through matching, A Brand from the at least one vendor based on a keyword "trendy sports shoes" and a bidding rule. The server obtains, through searching, a fact that the "sports shoes" are for sale by A Brand, obtains information about "trendy sports shoes" from A Brand through searching and sends the information to the terminal. The terminal displays an interface 1001 shown in FIG. 10, displays information about A Brand in a first area 1002 of the interface 1001, and displays the information about "trendy sports shoes" and information about other sports shoes in a second area 1003 of the first area 1002.

The following describes a search method in embodiments of this application with reference to the accompanying drawings in embodiments of this application.

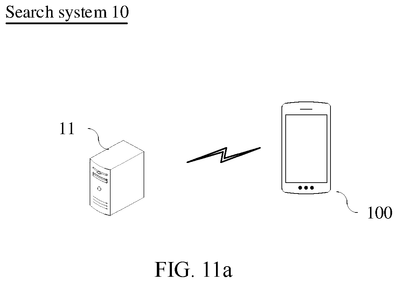

The search method provided in embodiments of this application may be applied to a search system that includes a terminal and a server shown in FIG. 11a. As shown in FIG. 11a, the search system 10 may include the terminal 100 and the server 11.

A client may be installed on the terminal 100. The client may be configured to obtain first information input by a user. For example, the first information is an image. The image may be an image stored in a database, or may be an image obtained by invoking a camera to take a photo. The client may be further configured to upload an image to the server, receive and display a query result returned by the server, and display the query result.

The terminal 100 may be a device with a display function, for example, a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, or a virtual reality device. A specific form of the terminal is not specially limited in embodiments of this application.

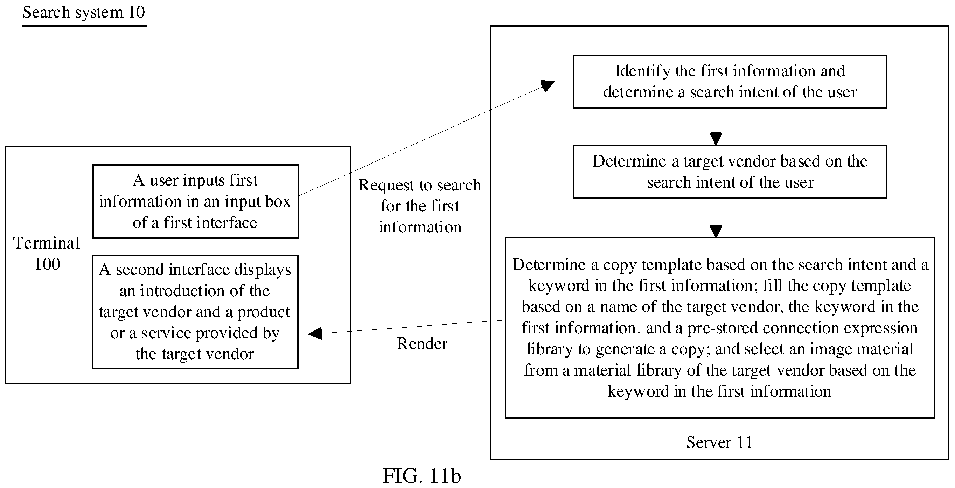

FIG. 11b is a block diagram of a principle of a search system 10 according to an embodiment of this application. As shown in FIG. 11b, a working principle of the search system 10 is that the terminal 100 displays a first interface. A user inputs first information in an input box of the first interface. The terminal 100 requests the server 11 to search for the first information. The server 11 identifies a search intent of the user based on the first information. The server 11 determines a target vendor based on the search intent of the user. The server 11 determines a copy template based on the search intent and a keyword in the first information. The server 11 fills the copy template based on a name of the target vendor, the keyword in the first information, and a pre-stored connection expression library to generate a copy. The server 11 selects an image material from a material library of the target vendor based on the keyword in the first information. The server 11 typesets the copy and the image material and then sends the typeset copy and image material to the terminal 100. The terminal 100 receives the typeset copy and image material, and performs rendering to display, on the second interface, a product or service provided by the target vendor.

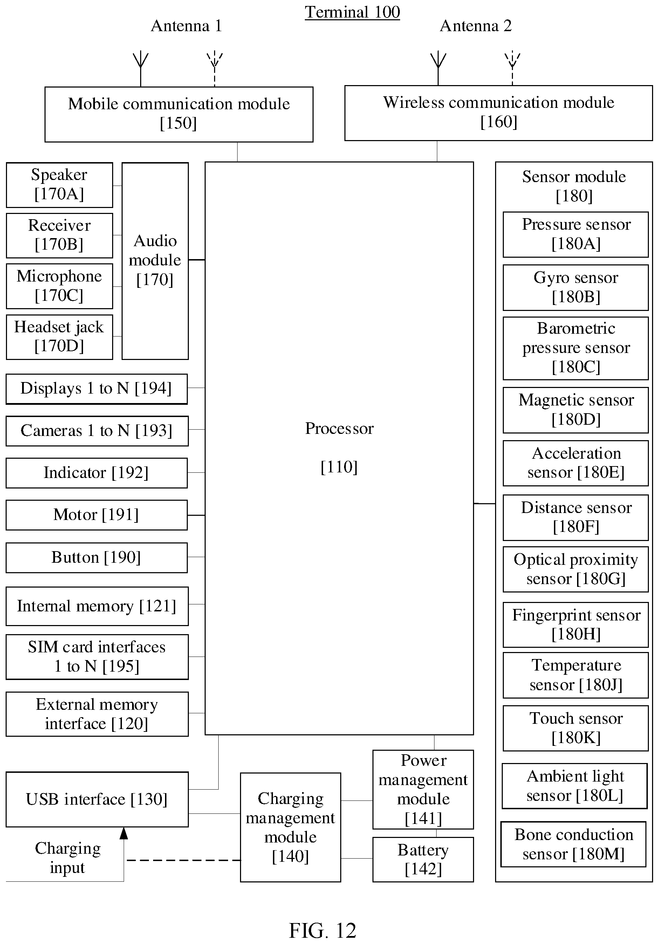

FIG. 12 is a block diagram of a structure of the foregoing terminal 100.

As shown in FIG. 12, the terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device. In some other feasible implementations of this application, the electronic device may include more or fewer components than those shown in the figure, or combine some components, or split some components, or have different component arrangements. This may be specifically determined based on an actual application scenario, and is not limited herein. The components shown in FIG. 2 may be implemented by hardware, software, or a combination of software and hardware.

Optionally, the foregoing processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, or/and a neural-network processor (neural-network processing unit, NPU). Different processing units may be independent components, or may be integrated into one or more processors.

The controller may be a nerve center and a command center of the electronic device. The controller may generate an operation control signal based on instruction operation code and a time sequence signal, to complete control of instruction fetching and instruction execution.

A memory may be further disposed in the processor 110, and is configured to store instructions and data. In some feasible implementations, the memory in the processor 110 is a cache memory. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some feasible implementations, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that, an interface connection relationship between the modules shown in an embodiment of this application is merely an example for description, and does not constitute a limitation on the structure of the electronic device. In some other feasible implementations of this application, the electronic device may alternatively use an interface connection manner different from that in the foregoing embodiment, or a combination of a plurality of interface connection manners.

The charging management module 140 is configured to receive a charging input from a charger and charge the power management module 141 of the electronic device. The charger may be a wireless charger or a wired charger.

The power management module 141 is configured to connect to the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like.

A wireless communication function of the electronic device may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Optionally, the antenna 1 and the antenna 2 may be configured to transmit a Bluetooth signal. Each antenna in the electronic device may be configured to cover one or more communication bands. Different antennas may be further multiplexed, to improve antenna utilization. For example, the antenna 1 may be multiplexed as a diversity antenna in a wireless local area network. In some other feasible implementations, the antenna may be used in combination with a tuning switch.

The mobile communication module 150 may provide a solution applied to the electronic device for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some feasible implementations, at least some functional modules of the mobile communication module 150 may be disposed in the processor 110. In some feasible implementations, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some feasible implementations, the modem processor may be an independent device. In some other feasible implementations, the modem processor may be independent of the processor 110, and disposed in a same device as the mobile communication module 150 or another functional module.

The wireless communication module 160 may provide a wireless communication solution that is applied to the electronic device and that includes a wireless local area network (wireless local area network, WLAN) such as a Wi-Fi network, Bluetooth (Bluetooth, BT), a global navigation satellite system (global navigation satellite system, GNSS), frequency modulation (frequency modulation, FM), near field communication (near field communication, NFC), an infrared technology (infrared, IR), and the like. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave through the antenna 2 for radiation.

In some feasible implementations, the antenna 1 and the mobile communication module 150 in the electronic device are coupled, and the antenna 2 and the wireless communication module 160 are coupled, so that the electronic device can communicate with a network and another device (for example, a second electronic device 200) by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device implements a display function by using the GPU, the display 194, the application processor, and the like. The GPU is a microprocessor for image processing and is connected to the display 194 and the application processor. The GPU is configured to perform mathematical and geometric computation for graphic rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some feasible implementations, the electronic device may include one or N displays 194, where N is a positive integer greater than 1.

In some feasible implementations, the display 194 may be configured to display interfaces for output by a system of the electronic device. For all the interfaces for output by the electronic device, refer to related descriptions of the subsequent embodiments.

The electronic device may implement a photographing function by using the ISP, the camera 193, the video codec, the GPU, the display 194, the application processor, and the like.

The external memory interface 120 may be configured to connect to an external storage card, for example, a micro SD card, to extend a storage capability of the electronic device. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device and data processing. The internal memory 121 may include a program storage area and a data storage area. The program storage area may store an operating system, an application program required by at least one function (for example, a device management function or a sound playing function), and the like. The data storage area may store data (such as a device parameter and a phone book) that are created when the electronic device is used, and the like. In addition, the internal memory 121 may include a high-speed random access memory, and may further include a nonvolatile memory, for example, at least one magnetic disk storage device, a flash storage device, and a universal flash storage (universal flash storage, UFS).

The electronic device may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some feasible implementations, the pressure sensor 180A may be disposed on the display 194. The gyro sensor 180B may be configured to determine a motion posture of the electronic device. The barometric pressure sensor 180C is configured to measure barometric pressure.

The acceleration sensor 180E may detect accelerations in various directions (usually on three axes) of the electronic device 100.

The distance sensor 180F is configured to measure a distance.

The ambient light sensor 180L is configured to sense ambient light brightness.

The fingerprint sensor 180H is configured to collect a fingerprint.

The temperature sensor 180J is configured to detect a temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor to determine a type of the touch event. A visual output related to the touch operation may be provided on the display 194. In some other feasible implementations, the touch sensor 180K may alternatively be disposed on a surface of the electronic device at a location different from a location of the display 194.

The button 190 includes a power button, a volume button, and the like. The button 190 may be a mechanical button, or may be a touch button.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect a SIM card. The SIM card may be inserted into the SIM card interface 195 or removed from the SIM card interface 195, to implement contact with or separation from the electronic device. In some feasible implementations, the electronic device uses an eSIM, that is, an embedded SIM card. The eSIM card may be embedded into the electronic device, and cannot be separated from the electronic device.

Certainly, the terminal 100 may further include another functional unit. This is not limited in embodiments of this application.

The following uses the architecture shown in FIG. 12 as an example to describe search methods provided in embodiments of this application. Units in the following embodiments may have components shown in FIG. 12. Details are not described again. It should be noted that, in embodiments of this application, names of messages exchanged between devices, names of parameters in the messages, or the like are merely examples. Other names may alternatively be used during specific implementation, "include" in embodiments of this application may also be understood as "carried", which is uniformly described herein. This is not specifically limited in embodiments of this application. In addition, actions, terms, and the like in embodiments of this application may be mutually referenced. This is not limited.

The following describes in detail a search method provided in an embodiment of this application.

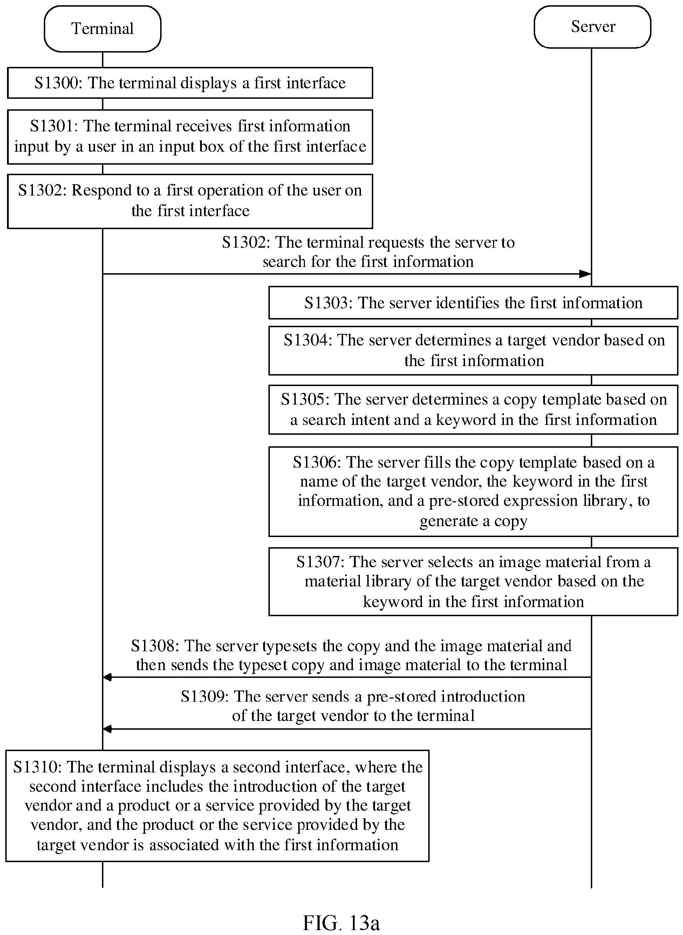

FIG. 13a is a schematic flowchart of a search method according to an embodiment of this application. As shown in FIG. 13a, the method includes the following steps.

S1300: A terminal displays a first interface (for example, a search interface), where the search interface is configured with an input box.

When a user needs to search for information, the user may use the terminal to log in to an image searching interface. For example, the user may open a search app on the terminal, and the app displays a search interface (the interface 101 shown in FIG. 1). The user may input the information into the input box 102 shown in FIG. 1.

The input box may alternatively be replaced with a search box, a search bar, a query box, or the like. Certainly, the input box may alternatively be replaced with another expression. This is not specifically limited in embodiments of this application.

S1301: The terminal receives first information input by the user in the input box of the first interface.

The first information may be an image, a text, or a video. Specific details are described above and are not described herein again.

S1302: In response to a first operation of the user on the first interface, the terminal requests a server to search for the first information.

In a specific implementation, the first information is an image. The terminal receives the first operation (for example, an upload operation) in which the user uploads the image in the input box, and uploads the image to the server, to request the server to search for the image.

For example, when the terminal detects that the user taps an upload button in the input box, the terminal may display a dialog box, and the dialog box may include an image stored in the terminal. The user may select an image to be uploaded to the server from the dialog box. After detecting that the user taps a finish button in the dialog box, the terminal uploads the image selected by the user to the server.

In another specific implementation, the first information is a text. The terminal receives the first information. When the user taps the "Search" control on the first interface 101 shown in FIG. 1, the terminal sends a search request to the server, and the search request carries the first information.

In some embodiments, the first operation may include a tapping operation, a sliding operation, a pressing operation, or the like. The tapping operation may include a single tapping operation, a double tapping operation, or the like. This is not specifically limited in embodiments of this application.

S1303: The server identifies the first information.

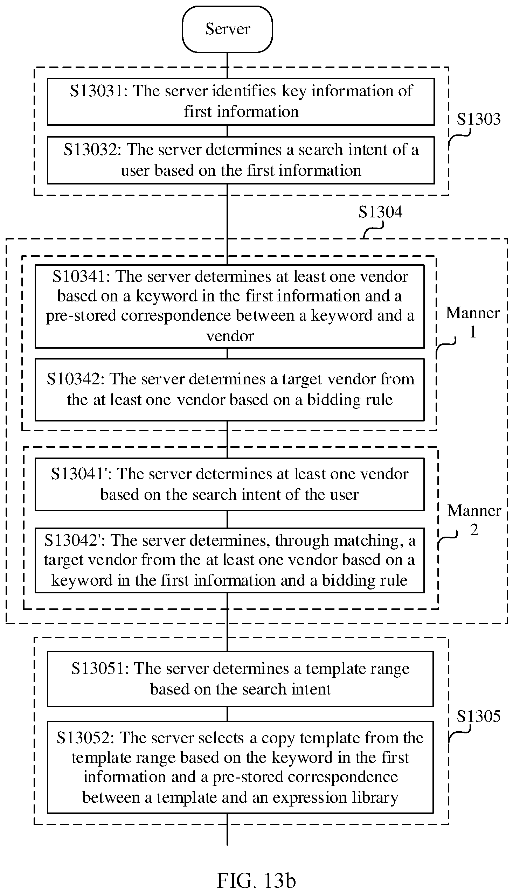

As shown in FIG. 13b, S1303 may be specifically implemented in the following manner.

S13031: The server identifies key information of the first information.

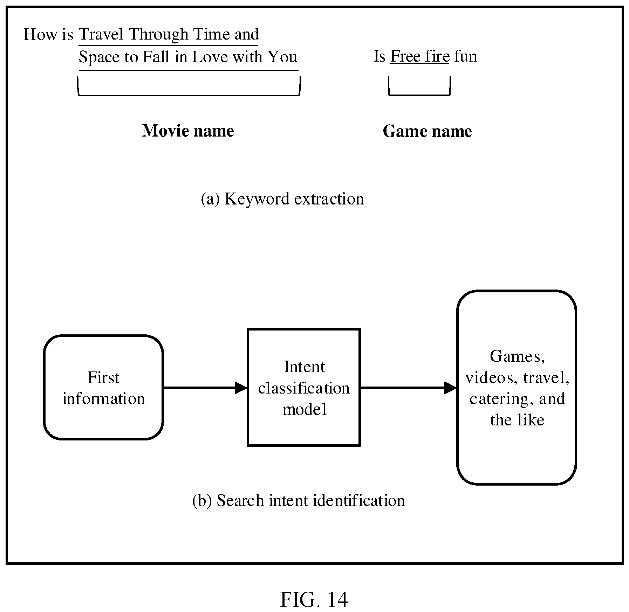

In a specific implementation, the first information is a text, and correspondingly, the key information may be a keyword. The server may extract the keyword from the text. In (a) keyword extraction shown in FIG. 14, in example 1, the text may be "How is Travel Through Time and Space to Fall in Love with You", and the server may split the text into a plurality of keywords, for example, "Travel", "Time and Space", "Fall in Love with You", "How is", "Travel through Time and Space" and "Travel Through Time and Space to Fall in Love with You". In example 2, the text may be "Is Free fire fun", and the server may split the text into a plurality of keywords, for example, "Free", "fire", "Free fire", and "fun".

In another specific implementation, the first information is an image, and correspondingly, the key information may be an image feature. That the server identifies the key information of the first information may be specifically implemented in the following manners. Manner 1: The server divides a first image into a plurality of grids, and extracts an image feature from each grid. Manner 2: The server inputs a first image into a feature extraction model, and outputs an image feature of the first image. The feature extraction model may be obtained through training based on a sample image and an image feature. Certainly, another manner may be used for implementation. This is not specifically limited in embodiments of this application.

S 1303 2: The server determines a search intent of the user based on the first information.

In a specific implementation, the server performs embedding (embedding) on the first information by using a BERT model, inputs an embedded first information into a multi-layer perception (multi-layer perception, MI,P), and outputs the search intent of the user.

BERT means pre-training a deeply bi-directional representation by jointly conditioning contexts in all layers. Therefore, a pre-trained BERT model representation may be fine-tuned with one additional output layer, to create a state-of-the-art model for a wide range of tasks, such as question answering and language inference.

MLP is a feedforward artificial neural network (artificial neural network, ANN), and maps a set of input vectors to a set of output vectors. MLP may be considered as a directed graph and includes a plurality of layers of nodes, with each layer fully connected to the next layer. Other than an input node, each node is a neuron with a non-linear activation function. MLP is trained by using a supervised learning method of the backpropagation algorithm (BP algorithm).

For example, in (b) search intent identification shown in FIG. 14, it is assumed that the first information is "How is Travel Through Time and Space to Fall in Love with You", and the server inputs one or more keywords of the keywords such as "Travel", "Time and Space", "Fall in Love with You", "How is", or "Travel Through Time and Space to Fall in Love with You" into an MLP model (the intent classification model shown in FIG. 14) and outputs movies and television. For example, it is assumed that the first information is "Is free fire (free fire) fun", the server inputs one or more keywords of obtained keywords such as "free", "fire", "free fire", and "fun" into an MLP model and output a game.

S1304: The server determines a target vendor based on the first information.

As shown in FIG. 13b, S1304 may be specifically implemented in the following manner.

### Manner 1:

S10341: The server determines at least one vendor based on the keyword in the first information and a pre-stored correspondence between a keyword and a vendor.

A correspondence between key information and a vendor may be established in the following manner. Manner 1: manual establishment. For example, a staff member may establish the correspondence between key information and a vendor based on a keyword provided by the vendor (or referred to as a brand company) and/or a search term collected by the staff member on another website or platform. Certainly, the key information may be manually updated at a predetermined time interval. Manner 2: automatic establishment. For example, the server may establish the correspondence between key information and a vendor based on a keyword provided by a brand company and a search term that is corresponding to the brand and that is stored in historical data. Certainly, when a new search term for the vendor exists in a database of the server, the server automatically updates the new search term to the key information.

In a specific implementation, the foregoing example in which the key information of the first information is "Travel Through Time and Space to Fall in Love with You" is still used. The server stores "'Travel Through Time and Space to Fall in Love with You' is corresponding to a vendor 1 and vendor 2". The server searches the database based on "Travel Through Time and Space to Fall in Love with You", and determines that the first information is corresponding to the vendor 1 and the vendor 2. Therefore, the first information corresponds to the vendor 1 and the vendor 2.

S10342: The server determines the target vendor from the at least one vendor based on a bidding rule.

When there are a plurality of vendors that are corresponding to the first information, the server may select a target vendor from the plurality of vendors based on a bidding rule. The process specifically includes:
The server determines advertisement fees of the plurality of vendors based on a predetermined payment mode and payment standard for advertisement of each vendor. The server selects a vendor with a highest advertisement fee as the target vendor that is corresponding to the first information.

It should be noted that, a brand company pre-determines a payment mode and payment standard when placing an advertisement. The payment mode may include payment based on a tap, payment based on an exposure rate, and the like.

In some embodiments, when the server determines that the target vendor meets a first condition, the server selects another vendor from the plurality of vendors as a vendor corresponding to the first information. The first condition may include: A quantity of exposure times is greater than a first threshold, or a payment amount is greater than a second threshold.

It should be noted that a manner of selecting another vendor may be the same as a manner of selecting the target vendor. For the manner of selecting the target vendor, refer to the foregoing related content. Details are not described herein again.

### Manner 2:

S13041': The server determines at least one vendor based on the search intent of the user.

In a specific implementation, the server finds the search intent of the user, and finds a vendor that is under the search intent. That is, a correspondence between a search intent of a user and a vendor is established.

The correspondence between a search intent of a user and a vendor may be established in the following manner. Manner 1: manual establishment. A staff member predefined a correspondence between a type of thing and a brand. For example, movies and television corresponds to a vendor 1 and a vendor 2, catering corresponds to a vendor 3, a vendor 4, and a vendor 5, travel corresponds to a vendor 6, and shopping corresponds to a vendor 7, a vendor 8, and a vendor 9. Manner 2: automatic establishment. The server may classify each vendor based on their attributes. For example, it is assumed that an attribute of the vendor 1 is delicious foods, an attribute of the vendor 2 is movies and television, an attribute of the vendor 3 is tourist attractions, an attribute of the vendor 4 is food, and an attribute of the vendor 5 is pastry. The server classifies vendors with a same vendor attribute or similar vendor attributes into one type. For example, the server classifies the vendor 1, the vendor 4, and the vendor 5 into the catering category, the vendor 2 into the movies and television category, and the vendor 3 into the travel category.

S13042': The server determines, through matching, the target vendor from the at least one vendor based on the keyword in the first information and a bidding rule.

It should be understood that the server determines, through matching, a plurality of vendors from the at least one vendor based on the bidding rule. The server performs matching, based on the keyword in the first information, with a plurality of vendors that are under the search intent, for example, the server searches websites or apps of the plurality of vendors based on the keyword in the first information for the product or service that is provided by the target vendor and that is corresponding to the keyword.

The bidding rule may include a payment mode for advertisement, a payment standard for advertisement, or the like. The payment mode may include payment based on a tap, payment based on an exposure rate, and the like.

In some embodiments, when the server determines that the target vendor meets a first condition, the server selects another vendor from the plurality of vendors as a vendor corresponding to the first information. The first condition may include: A quantity of exposure times is greater than a first threshold, or a payment amount is greater than a second threshold.

It should be noted that a manner of selecting another vendor may be the same as a manner of selecting the target vendor. For the manner of selecting the target vendor, refer to the foregoing related content. Details are not described herein again.

S1305: The server determines a copy template based on the search intent and the keyword in the first information.

As shown in FIG. 13b, this step may be specifically implemented as follows.

S13051: The server determines a template range based on the search intent. For example, as described above, the first information is "How is Travel Through Time and Space to Fall in Love with You". Correspondingly, the search intent is movies and television, and the server may determine that the template range is a movies and television template.

Table 1 is as follows.

**Table 1**

| Template range | Templates |
|---|---|
| Movies and television template | [Connection expression library 1][Brand] [Video expression library 1] |
| | [Connection expression library 1][Brand][Connection expression library 2][Video name] |
| Travel template | [Connection expression library 1][Brand][Travel expression library 1] |
| | [Connection expression library 1][Brand][Connection expression library 3][Tourist attraction name] |
| Catering template | [Connection expression library 1][Brand][Catering expression library 1] |
| | [Connection expression library 1][Brand][Connection expression library 4][Food name] |

S13052: The server selects the copy template from the template range based on the keyword in the first information and a pre-stored correspondence between a template and an expression library.

The expression library may include a connection expression library, a vendor library, a search intent-related expression library, and the like.

The connection expression library may be classified into a verb library, an adjective library, a noun library, a pronoun library, and the like based on a part of speech. The verb library may include on, come, enter, watch, browse, taste, and the like. The pronoun library may include enjoy, feel, how about, how, and the like. The noun library may include popular tourist attraction, excellent movie, delicious foods, big meal, and the like. The adjective library may include a feast for the eyes and ears, quality travel, and the like.

An expression library that is related to the search intent may include an expression related to the search intent. For example, if the search intent is movies and television, related expressions may include: watch an excellent movie, enjoy a feast to the eyes and ears, and the like. If the search intent is travel, related expressions may include: popular tourist attraction, enjoy quality travel, and the like. If the search intent is catering, related expressions may include: taste delicious foods, enjoy a big meal, and the like.

The expression libraries may be shown in Table 2.

**Table 2 Expression libraries**

| Expression library names | Content |
|---|---|
| Connection expression library 1 | Be, come, and enter |
| Video expression library 1 | Watch an excellent movie, and enjoy a feast to the eyes and ears |
| Connection expression library 2 | Watch, and enjoy |
| Travel expression library 1 | Visit a popular tourist attraction, and enjoy quality travel |
| Connection expression library 3 | Visit, and feel |
| Catering expression library 1 | Taste delicious foods, and enjoy a big meal |
| Connection expression library 4 | Taste, and enjoy |
| ... | ... |

This step may be specifically implemented in the following manner.

First, the server determines that the keyword in the first information is included in an information library. The server selects a template that includes the keyword and that is in the template range as the copy template.

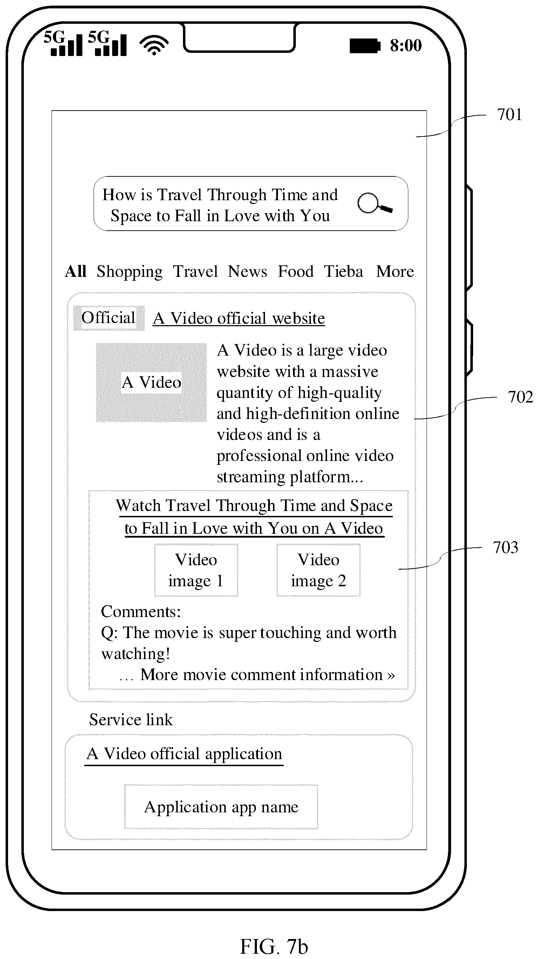

Example 1: It is assumed that the first information is "How is Travel Through Time and Space to Fall in Love with You", and the key information of the first information may be "Travel Through Time and Space to Fall in Love with You". The server determines that "Travel Through Time and Space to Fall in Love with You" is a video name, and the server obtains, through searching, a template that includes [video name] in the movies and television template. The interfaces shown in FIG. 7a and FIG. 7b are used as an example.

Second, the server determines that the information library does not include the keyword in the first information. The server determines a template that does not include the keyword and that is in the template range as the copy template.

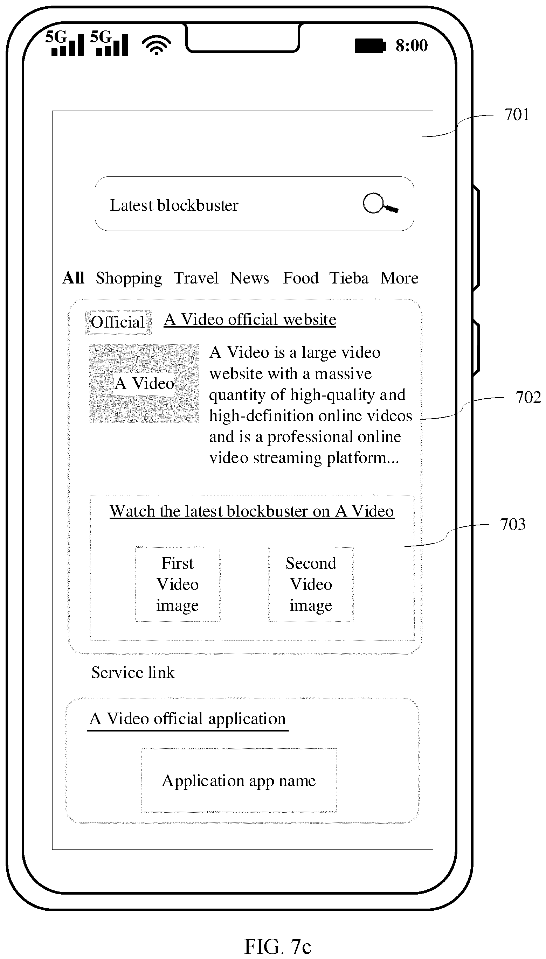

Example 2: It is assumed that the first information is "recent latest blockbuster", and the key information of the first information may be "latest blockbuster". The server determines that "latest blockbuster" is not a video name, and the server searches for a template that does not include [video name] in the movies and television template. The interface shown in FIG. 7c is used as an example.

S1306: The server fills the copy template based on a name of the target vendor, the keyword in the first information, and a pre-stored expression library, to generate a copy.

For example, it is assumed that the keyword in the first information is "Travel Through Time and Space to Fall in Love with You", and a name of the target vendor is "A Video". The server may select an expression such as "on" and "watch" from a pre-stored connection expression library. In conclusion, the copy obtained by the server is "watch Travel Through Time and Space to Fall in Love with You on A Video".

For example, it is assumed that the keyword in the first information is "watch a movie", and a name of the target vendor is "A Video". The server may select an expression such as "on" from the pre-stored connection expression library. The server may select an expression such as "watch an excellent movie" from the pre-stored video expression library. In conclusion, the copy obtained by the server is "watch an excellent movie on A Video".

S1307: The server selects an image material from a material library of the target vendor based on the keyword in the first information.

In some embodiments, the server selects an image material from a material library of the target vendor based on the name of the target vendor and the keyword in the first information. The server typesets the copy and the image material.

The copy and the image material may be typeset and arranged and an obtained typesetting pattern may be in a plurality of forms. This is not specifically limited in embodiments of this application. In specific implementation, for example, "Movie image 1", "Movie image 2", and "Comment" in the second area 703 shown in FIG. 7a form a typesetting pattern. Alternatively, "Family hamburger image 1", "Family hamburger package image 2", and "Updated hamburger information" in the second area 803 shown in FIG. 8 form a typesetting pattern.

S1308: The server typesets the copy and the image material and then sends the typeset copy and image material to the terminal, and correspondingly, the terminal receives the typeset copy and image material.

S1309: The server sends a pre-stored introduction of the target vendor to the terminal, and correspondingly, the terminal receives the introduction of the target vendor.

S1310: The terminal displays a second interface, where the second interface includes the introduction of the target vendor and the product or service provided by the target vendor, and the product or service provided by the target vendor is associated with the first information.

In other words, the terminal receives the introduction of the target vendor, and performs rendering to display the introduction of the target vendor in a first area. The terminal receives the typeset copy and image material, and performs rendering to display the product or service provided by the target vendor in a second area.

For example, the foregoing example in which the first information is "How is Travel Through Time and Space to Fall in Love with You" is still used. The terminal displays the interface 701 shown in FIG. 7a, displays the second area 703 on the interface 701, and displays "Watch Travel Through Time and Space to Fall in Love with You on A Video", "Video image 1", and "Video image 2" on the second area 703. Certainly, to completely search for information that the user wants to know, if information that the user searches for is information about a question, the terminal displays an answer to the question of the user. For example, as shown in FIG. 7b, the second area 703 may further display movie comment information, for example, "Comments: Q: The movie is super touching and worth watching!... More movie comment information."

In an embodiment of this application, the terminal receives the first information input by the user in the input box of the first interface. When the user performs the operation on the first interface of the terminal, the terminal requests the server to search for the first information. The server obtains, based on the first information through searching, the product or service that is provided by the target vendor and that is related to the first information, and sends the product or service provided by the target vendor to the terminal. The second interface of the terminal displays the product or service provided by the target vendor. In this way, the user can accurately obtain searched-for content through searching, and a search requirement in an actual application scenario of the user is met. In addition, a purpose of brand promotion is achieved, and user experience is improved.

For a specific implementation of the embodiment of this application, refer to the foregoing related content. Details are not described again in this embodiment of this application.

Solutions in the foregoing embodiments of this application may be combined on a premise that the solutions are not contradictory.

An embodiment of this application provides still another search system. The search system may include a terminal, and the terminal is configured to:
receive first information input by a user in an input box of a first interface;
in response to an operation of the user on the first interface, request a server to search for the first information; and
display a second interface, where the second interface includes an introduction of a target vendor and a product or service provided by the target vendor, and the product or service provided by the target vendor is associated with the first information.

In some embodiments, the search system may further include a server, and the server is configured to:
extract a keyword in the first information;
determine at least one vendor based on the keyword in the first information and a pre-stored correspondence between a keyword and a vendor; and
determine the target vendor from the at least one vendor based on a bidding rule.

In some embodiments, the search system may further include a server, and the server is configured to:
determine a search intent of the user based on the first information;
determine at least one vendor based on the search intent of the user; and
determine, through matching, the target vendor from the at least one vendor based on a keyword in the first information and a bidding rule.

In some embodiments, the server is further configured to:
determine a copy template based on the search intent and the keyword in the first information;
fill the copy template based on a name of the target vendor, the keyword in the first information, and a pre-stored expression library to generate a copy;
select an image material from a material library of the target vendor based on the keyword in the first information; and
typeset the copy and the image material and then send the typeset copy and image material to the terminal.

In some embodiments, the terminal is further configured to:
receive the typeset copy and image material, and perform rendering to display the product or service provided by the target vendor.

In some embodiments, the server is further configured to send the pre-stored introduction of the target vendor to the terminal.

The terminal is further configured to receive the introduction of the target vendor, and perform rendering to display the introduction of the target vendor.

In some embodiments, the first information may be a text, an image, or a video.

In some embodiments, the search intent may include movies and television, shopping, delicious foods, or travel.

In an embodiment of this application, the terminal receives the first information input by the user in the input box of the first interface. When the user performs the operation on the first interface of the terminal, the terminal requests the server to search for the first information. The server obtains, based on the first information through searching, the product or service that is provided by the target vendor and that is related to the first information, and sends the product or service provided by the target vendor to the terminal. The second interface of the terminal displays the product or service provided by the target vendor. In this way, the user can accurately obtain searched-for content through searching, and a search requirement in an actual application scenario of the user is met. In addition, a purpose of brand promotion is achieved, and user experience is improved.

An embodiment of this application further provides a terminal. The terminal includes a touchscreen, a memory, a transceiver, one or more processors, a plurality of applications, and one or more programs. The one or more programs are stored in the memory, and the transceiver is configured to transmit or receive a wireless signal. When the one or more processors execute the one or more programs, the terminal is enabled to perform any one of the foregoing methods.

An embodiment of this application further provides a server. The server includes a memory, a transceiver, one or more processors, a plurality of applications, and one or more programs. The one or more programs are stored in the memory, and the transceiver is configured to transmit or receive a wireless signal. When the one or more processors execute the one or more programs, the server is enabled to perform any one of the foregoing methods.

An embodiment of this application further provides a computer-readable storage medium that includes instructions. When the instructions are run on a computer, the computer is enabled to perform any one of the foregoing methods.

An embodiment of this application further provides a computer program product that includes instructions. When the computer program product is run on a computer, the computer is enabled to perform any one of the foregoing methods.

An embodiment of this application further provides a chip. The chip includes a processor and an interface circuit. The interface circuit is coupled to the processor. The processor is configured to run computer programs or instructions, to implement the foregoing methods. The interface circuit is used to communicate with another module outside the chip.

In descriptions of this application, unless otherwise specified, "/" means "or". For example, A/B may represent A or B. The term "and/or" in this specification describes only an association relationship between associated objects and indicates that three relationships may exist. For example, A and/or B may represent the following three cases: Only A exists, both A and B exist, and only B exists. In addition, "at least one" means one or more, and "a plurality of" means two or more. The terms such as "first" and "second" do not limit a quantity or an execution sequence, and the terms such as "first" and "second" do not indicate a definite difference.

In the descriptions of this application, the terms such as "example" or "for example" are used to give an example, an illustration, or a description. Any embodiment or design solution described as an "example" or "for example" in embodiments of this application should not be explained as being more preferred or having more advantages than another embodiment or design solution. To be precise, the terms such as "example" or "for example" are intended to present a related concept in a specific manner.

The foregoing descriptions about implementations allow a person skilled in the art to clearly understand that, for convenient and brief description, division of the foregoing functional modules is used as an example for description. During actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division of the modules or units is merely logical function division. During actual implementation, there may be another division manner. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the purposes of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A search method, wherein the method comprises:
receiving, by a terminal, first information input by a user in an input box of a first interface;
in response to an operation of the user on the first interface, requesting, by the terminal, a server to search for the first information; and
displaying, by the terminal, a second interface, wherein the second interface comprises an introduction of a target advertised vendor and a product or service provided by the target advertised vendor, and the product or service provided by the target advertised vendor is associated with the first information.

2. The method according to claim 1, wherein before the displaying, by the terminal, a second interface, the method further comprises:
extracting, by the server, a keyword in the first information;
determining, by the server, at least one advertised vendor based on the keyword in the first information and a pre-stored correspondence between a keyword and an advertised vendor; and
determining, by the server, the target advertised vendor from the at least one advertised vendor based on a bidding rule.

3. The method according to claim 1, wherein before the displaying, by the terminal, a second interface, the method further comprises:
determining, by the server, a search intent of the user based on the first information;
determining, by the server, at least one advertised vendor based on the search intent of the user; and
determining, by the server through matching, the target advertised vendor from the at least one advertised vendor based on a keyword in the first information and a bidding rule.

4. The method according to claim 3, wherein the method further comprises:
determining, by the server, a copy template based on the search intent and the keyword in the first information;
filling, by the server, the copy template based on a name of the target advertised vendor, the keyword in the first information, and a pre-stored expression library, to generate a copy;
selecting, by the server, an image material from a material library of the target advertised vendor based on the keyword in the first information; and
typesetting, by the server, the copy and the image material and then sending the typeset copy and image material to the terminal.

5. The method according to claim 4, wherein the method further comprises:
receiving, by the terminal, the typeset copy and image material, and performing rendering to display the product or service provided by the target advertised vendor.

6. The method according to any one of claims 2 to 5, wherein the method further comprises:
sending, by the server, the pre-stored introduction of the target advertised vendor to the terminal; and
receiving, by the terminal, the introduction of the target advertised vendor, and performing rendering to display the introduction of the target advertised vendor.

7. The method according to any one of claims 1 to 6, wherein the first information is a text, an image, or a video.

8. The method according to any one of claims 3 to 7, wherein the search intent comprises movies and television, shopping, delicious foods, or travel.

9. A search system, comprising a terminal, wherein the terminal is configured to:
receive first information input by a user in an input box of a first interface;
in response to an operation of the user on the first interface, request a server to search for the first information; and
display a second interface, wherein the second interface comprises an introduction of a target advertised vendor and a product or service provided by the target advertised vendor, and the product or service provided by the target advertised vendor is associated with the first information.

10. The system according to claim 9, wherein the system further comprises a server and the server is configured to:
extract a keyword in the first information;
determine at least one advertised vendor based on the keyword in the first information and a pre-stored correspondence between a keyword and an advertised vendor; and
determine the target advertised vendor from the at least one advertised vendor based on a bidding rule.

11. The system according to claim 9, wherein the system further comprises a server and the server is configured to:
determine a search intent of the user based on the first information;
determine at least one advertised vendor based on the search intent of the user; and
determine, through matching, the target advertised vendor from the at least one advertised vendor based on a keyword in the first information and a bidding rule.

12. The system according to claim 11, wherein the server is further configured to:
determine a copy template based on the search intent and the keyword in the first information;
fill the copy template based on a name of the target advertised vendor, the keyword in the first information, and a pre-stored expression library, to generate a copy;
select an image material from a material library of the target advertised vendor based on the keyword in the first information; and
typeset the copy and the image material and then send the typeset copy and image material to the terminal.

13. The system according to claim 12, wherein the terminal is further configured to:
receive the typeset copy and image material, and perform rendering to display the product or service provided by the target advertised vendor.

14. The system according to any one of claims 10 to 13, wherein
the server is further configured to send the pre-stored introduction of the target advertised vendor to the terminal; and
the terminal is further configured to receive the introduction of the target advertised vendor, and perform rendering to display the introduction of the target advertised vendor.

15. The system according to any one of claims 9 to 14, wherein the first information is a text, an image, or a video.

16. The system according to any one of claims 11 to 15, wherein the search intent comprises movies and television, shopping, delicious foods, or travel.

17. A terminal, wherein the terminal comprises a touchscreen, a memory, a transceiver, one or more processors, a plurality of applications, and one or more programs, the one or more programs are stored in the memory, the transceiver is configured to transmit or receive a wireless signal, and when the one or more processors execute the one or more programs, the terminal is enabled to implement the method according to any one of claim 1 and claims 5 to 8.

18. A server, wherein the server comprises a memory, a transceiver, one or more processors, a plurality of applications, and one or more programs, the one or more programs are stored in the memory, the transceiver is configured to transmit or receive a wireless signal, and when the one or more processors execute the one or more programs, the server is enabled to implement the method according to any one of claims 2 to 4 and claims 6 to 8.

19. A computer-readable storage medium, wherein the computer-readable storage medium comprises computer instructions, and when the computer instructions are run on an electronic device, the electronic device is enabled to perform the search method according to any one of claims 1 to 8.

20. A computer program product, wherein when the program is invoked by a processor, the search method according to any one of claims 1 to 8 is performed.

21. A chip system, comprising one or more processors, wherein when the one or more processors execute instructions, the one or more processors performs the search method according to any one of claims 1 to 8.
